(19) Europäisches Patentamt
European Patent Office
Office européen des brevets

(11) **EP 3 795 707 A1**

(12) **EUROPEAN PATENT APPLICATION**
published in accordance with Art. 153(4) EPC

(43) Date of publication:
24.03.2021 Bulletin 2021/12

(51) Int Cl.:
*C22C 38/00* (2006.01)       *B22F 3/105* (2006.01)
*B22F 3/16* (2006.01)        *B33Y 10/00* (2015.01)
*B33Y 70/00* (2020.01)       *B33Y 80/00* (2015.01)
*C22C 38/60* (2006.01)

(21) Application number: 19803688.1

(22) Date of filing: 25.04.2019

(86) International application number:
PCT/JP2019/017665

(87) International publication number:
WO 2019/220917 (21.11.2019 Gazette 2019/47)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 14.05.2018 JP 2018092876

(71) Applicants:
• **Hitachi Metals, Ltd.**
**Minato-ku**
**Tokyo 108-8224 (JP)**
• **TOYOTA JIDOSHA KABUSHIKI KAISHA**
**Toyota-shi, Aichi 471-8571 (JP)**

(72) Inventors:
• **FUKUZAWA Norihide**
**Tokyo 108-8224 (JP)**
• **SAKAMAKI Kouichi**
**Tokyo 108-8224 (JP)**
• **NAKANO Yousuke**
**Tokyo 108-8224 (JP)**
• **FUKUMOTO Shiho**
**Tokyo 108-8224 (JP)**
• **SAITO Kazuya**
**Tokyo 108-8224 (JP)**
• **KUWABARA Kousuke**
**Tokyo 108-8224 (JP)**

(74) Representative: **Pfenning, Meinig & Partner mbB**
**Patent- und Rechtsanwälte**
**Theresienhöhe 11a**
**80339 München (DE)**

(54) **ADDITIVELY MANUFACTURED HOT WORK TOOL, METHOD FOR MANUFACTURING SAME, AND METAL POWDER FOR ADDITIVELY MANUFACTURED HOT WORK TOOL**

(57) An additive layer manufactured hot work tool according to the present disclosure includes a component composition of, by mass%, C: 0.3 to 0.5%, Si: 2.0% or less, Mn: 1.5% or less, P: 0.05% or less, S: 0.05% or less, Cr: 3.0 to 6.0%, 1 or 2 kinds of compounds of Mo and W, a relation between Mo and W being represented by a relational expression $(Mo+1/2W)$: 0.5 to 3.5%, V: 0.1 to 1.5%, Ni: 0 to 1.0%, Co: 0 to 1.0%, Nb: 0 to 0.3%, and Fe and an unavoidable impurity as a remainder, and an area ratio of defects having an area of $1 \ \mu m^2$ or more is 0.6% or less in a cross section parallel to the lamination direction. The present disclosure also provides a method of manufacturing an additive layer manufactured hot work tool according to the present disclosure includes additive layer manufacturing a metal powder including the above component composition and then performing tempering. The present disclosure further provides a metal powder including the above component composition.

$200\mu m$

F i g. 1

# Description

## Technical Field

The present disclosure relates to a hot work tool manufactured by an additive layer manufacturing method and is optimally used for various applications such as a press die, a forging die, a die-casting die, and an extrusion tool, a method for manufacturing the hot work tool, and a metal powder that can be used for manufacturing the hot work tool.

## Background Art

Hot work tools must be tough enough to withstand impact, because they are used in contact with hot or hard materials to be processed. For example, alloy tool steel of SKD 61, which is a JIS steel type, has been used as a hot work tool material. In order to meet the recent demand for further improvement in the toughness, an alloy tool steel with a component composition which is an improvement over that of the alloy tool steel of SKD 61 has been proposed.

The hot work tool material is usually made of a steel ingot produced by the ingot-making method or a material made of a steel piece obtained by processing a steel ingot into a bloom, as a starting material, and is subjected to various hot working processes and heat treatments to obtain a predetermined steel material, which is then subjected to an annealing treatment to finish. The hot work tool material is usually supplied to a manufacturer of the hot work tools in an annealed state having low hardness. The hot work tool material supplied to the manufacturer is machined into a shape of the hot work tool and then adjusted to predetermined working hardness by quenching and tempering. The finishing machining is generally performed after the hardness is adjusted to the working hardness. In some cases, a hot work tool material in the annealed state is subjected to quenching and tempering first, and then machined into a shape of the hot work tool together with the above-described finishing machining. Quenching is an operation of heating a hot work tool (or a hot work tool material after it has been machined) to an austenite temperature range and quenching it thereby subject the hot work tool to martensitic transformation. Thus, a component composition of the hot work tool material is the one can be adjusted to become a martensitic structure by quenching.

Recently, an additive layer manufacturing method has attracted attention as means for easily forming a metal product having a complicated shape in a near-net shape. The additive layer manufacturing method is an additive manufacturing technique commonly referred to as 3D printing. There are, for example, a powder spray method and a powder bed method as types of the additive layer manufacturing method. In the powder spray method, layers are stacked by irradiating a metal powder with a heat source to melt the metal powder. In the powder bed method, an operation of irradiating a metal powder laid on a stage with a heat source to be melted and then solidifying the metal powder is repeated, so that layers are stacked. According to the additive layer manufacturing method, a metal product having a complicated shape can be manufactured by omitting a large part of machining process according to the related art. Also in the field of hot work tools, an "additive layer manufactured hot work tool" produced by the above-described additive layer manufacturing method has been proposed (Patent Literature 1).

### Citation List

### Patent Literature

Patent Literature 1: Japanese Unexamined Patent Application Publication No. 2016-145407

## Summary of Invention

### Technical Problem

An "additive layer manufactured hot work tool" having a complicated shape can be produced by using the additive layer manufacturing method. Compared with a hot work tool manufactured by the ingot making method, the additive layer manufactured hot work tool adjusted to the same hardness as that of the hot work tool manufactured by the ingot making method can be expected to have excellent toughness. However, some actually produced additive layer manufactured hot work tools have not achieved excellent toughness.

An object of the present disclosure is to provide an additive layer manufactured hot work tool excellent in toughness, a method of manufacturing the same, and a metal powder that can be used for manufacturing the hot work tool.

### Solution to Problem

The present disclosure is an additive layer manufactured hot work tool comprises a component composition of, by mass%, C: 0.3 to 0.5%, Si: 2.0% or less, Mn: 1.5% or less, P: 0.05% or less, S: 0.05% or less, Cr: 3.0 to 6.0%, 1 or 2 kinds of compounds of Mo and W, a relation between Mo and W being represented by a relational expression (Mo+1/2W): 0.5 to 3.5%, V: 0.1 to 1.5%, Ni: 0 to 1.0%, Co: 0 to 1.0%, Nb: 0 to 0.3%, and Fe and an unavoidable impurity as a remainder, and an area ratio of defects having an area of 1 $\mu m^2$ or more is 0.6% or less in a cross section parallel to the lamination direction.

Preferably, the additive layer manufactured hot work tool has hardness of 40 to 50 HRC.

Further, the present disclosure is a method of manufacturing an additive layer manufactured hot work tool including: an additive layer manufacturing step of forming an additive layer manufactured object by repeating an operation of laying out, on a stage, a metal powder comprising a component composition of, by mass%, C: 0.3 to 0.5%, Si: 2.0% or less, Mn: 1.5% or less, P: 0.05% or less, S: 0.05% or less, Cr: 3.0 to 6.0%, 1 or 2 kinds of compounds of Mo and W, a relation between Mo and W being represented by a relational expression (Mo+1/2W): 0.5 to 3.5%, V: 0.1 to 1.5%, Ni: 0 to 1.0%, Co: 0 to 1.0%, Nb: 0 to 0.3%, and Fe and an unavoidable impurity as a remainder, irradiating the metal powder laid out on the stage with a heat source while scanning the heat source on the metal powder, and partially melting and solidifying the metal powder upward in a scanning direction of the heat source; and a heat treatment step of tempering the additive layer manufactured object formed in the additive layer manufacturing step at a tempering temperature of 500 to 700 °C.

Preferably, in the heat treatment step, quenching is performed at a quenching temperature of 900 to 1100 °C before the tempering is performed. At this time, the quenching temperature is more preferably 1010 °C or less. Alternatively, in the heat treatment step, the quenching may not be performed before the tempering. Further, in the method of manufacturing an additive layer manufactured hot work tool, the hardness is preferably adjusted to 40 to 50 HRC in these heat treatment steps.

Furthermore, the present disclosure is a metal powder for an additive layer manufactured hot work tool comprising a component composition of, by mass%, C: 0.3 to 0.5%, Si: 2.0% or less, Mn: 1.5% or less, P: 0.05% or less, S: 0.05% or less, Cr: 3.0 to 6.0%, 1 or 2 kinds of compounds of Mo and W, a relation between Mo and W being represented by a relational expression (Mo+1/2W): 0.5 to 3.5%, V: 0.1 to 1.5%, Ni: 0 to 1.0%, Co: 0 to 1.0%, Nb: 0 to 0.3%, and Fe and an unavoidable impurity as a remainder.

**Advantageous Effects of Invention**

According to the present disclosure, it is possible to improve toughness of an additive layer manufactured hot work tool.

**Brief Description of Drawings**

Fig. 1 is an optical micrograph showing an example of defects confirmed in a cross section parallel to a lamination direction of an additive layer manufactured hot work tool according to an embodiment of the present disclosure;
Fig. 2 is an optical micrograph showing an example of defects confirmed in a cross section parallel to a lamination direction of the additive layer manufactured hot work tool according to a comparative example;
Fig. 3 is a transmission electron micrograph showing an example of vanadium carbide confirmed in a cross section parallel to the lamination direction of the additive layer manufactured hot work tool according to an example of the present disclosure; and
Fig. 4 is a transmission electron micrograph showing an example of vanadium carbide confirmed in a cross section parallel to the lamination direction of the additive layer manufactured hot work tool according to an example of the present disclosure.

**Description of Embodiments**

A feature of the present disclosure is that it has been found that the toughness of a hot work tool brought by a component composition of hot work tool steel is affected by "defects" in the tool, which are caused by a special manufacturing process called an additive layer manufacturing method. Hereinafter, the requirements of the present disclosure will be described together with the favorable requirements.

(1) An additive layer manufactured hot work tool according to the present disclosure has a component composition of, by mass%, C: 0.3 to 0.5%, Si: 2.0% or less, Mn: 1.5% or less, P: 0.05% or less, S: 0.05% or less, Cr: 3.0 to 6.0%, 1 or 2 kinds of compounds of Mo and W, a relation between Mo and W being represented by a relational expression (Mo+1/2W): 0.5 to 3.5%, V: 0.1 to 1.5%, Ni: 0 to 1.0%, Co: 0 to 1.0%, Nb: 0 to 0.3%, and Fe and an unavoidable impurity as a remainder.

In the related art, as described above, a material having a component composition that expresses a martensitic structure by quenching and tempering is used as a material for a hot work tool. The martensitic structure is necessary to establish a basement of the absolute toughness of various hot work tools. The additive layer manufactured hot work tool according to the present disclosure has the following component composition.

-C: 0.3 to 0.5 mass% (hereinafter simply referred to as "%")

C is a basic element of the hot work tool, a part of which is dissolved in a base to impart strength, and a part of which forms carbide to enhance abrasion resistance and seizure resistance. When C dissolved as an interstitial atom is added together with a substitutional atom having a high affinity for C such as Cr, an I (interstitial atom) -S (substitutional atom) effect (the action of increasing the strength of a hot work tool by acting as a drag resistance of solute atoms) is also expected. However, an excessive inclusion of C causes a decrease in toughness and hot strength. Therefore, the content of C shall be 0.3 to 0.5%. It is preferably 0.34% or more. Further, it is preferably 0.40% or less.

-Si: 2.0% or less

Si is a deoxidizer used to adjust a component composition of molten steel, but an excessive inclusion of Si results in the formation of ferrite in the tool structure after tempering. Thus, the content of Si should be 2.0% or less. It is preferably 1.0% or less. It is more preferably 0.8% or less, and still more preferably 0.5% or less. It is even more preferably 0.4% or less. On the other hand, Si has the effect of enhancing the machinability of the material. In order to obtain this effect, the content of Si is preferably 0.2% or more. It is more preferably 0.3% or more.

-Mn: 1.5% or less

An excessive inclusion of Mn increases the deformability of the base and reduces the machinability of the material. Thus, the content of Mn is 1.5% or less. It is preferably 1.0% or less. It is more preferably 0.75% or less, and still more preferably 0.7% or less. On the other hand, Mn has the effect of improving the hardenability, preventing the formation of ferrite in the tool structure and, and obtaining appropriate quenching and tempering hardness. Further, the presence of MnS as a non-metallic inclusion has a large effect on the improvement of the machinability. In order to obtain these effects, the content of Mn is preferably 0.1% or more. It is more preferably 0.25% or more. It is still more preferably 0.45% or more, and even more preferably 0.55% or more.

-P: 0.05% or less

P is an element that can inevitably be usually included in various hot work tools even when it is not added. P is an element that segregates to prior austenite grain boundaries during a heat treatment such as tempering and embrittles the grain boundaries. Thus, in order to improve the toughness of the hot work tool, the content of P is limited to 0.05% or less, including the content of P when P is added. The content of P is preferably 0.03% or less, and more preferably 0.01% or less.

-S: 0.05% or less

S is an element that can inevitably be usually included in various hot work tools even when it is not added. S forms inclusions and reduces the toughness. Thus, in the present disclosure, the content of S is limited to 0.05% or less. It is preferably 0.01% or less, and more preferably 0.005% or less. On the other hand, S has the effect of improving the machinability by being combined with the above-mentioned Mn and existing as MnS of a non-metallic inclusion. In order to obtain this effect, the content of S is preferably 0.03% or more.

-Cr: 3.0 to 6.0%

Cr is a basic element of hot work tools and has the effects of improving the hardenability, strengthening bases, and improving the abrasion resistance and toughness by forming carbide. However, an excessive inclusion of Cr causes a decrease in the hardenability and the high-temperature strength. Thus, the content of Cr shall be 3.0 to 6.0%. It is preferably 5.5% or less. It is more preferably 5.0% or less. It is still more preferably 4.5% or less, and even more preferably 4.3% or less. Further, it is preferably 3.5% or more. It is more preferably 3.6% or more, and still more preferably 3.7% or more. In the present disclosure, since the effect of improving the toughness by reducing defects in a hot work tool, which will be described later, is already achieved, Cr can be reduced by the amount corresponding to this effect. In this case, the high-temperature strength of the hot work tool can be further improved by, for example, reducing the content of Cr to 5.0% or less, and further reducing it to 4.5% or less or 4.3% or less.

-1 or 2 kinds of Mo and W, a relation between Mo and W being represented by the relational expression of (Mo+1/2W): 0.5 to 3.5%

Mo and W can be included alone or in combination in order to provide the strength by precipitation or agglomeration of fine carbide by tempering and to improve the softening resistance. The content of 1 or 2 kinds of compounds of Mo and W can be defined together by the Mo equivalent defined by the relational expression (Mo+1/2W), because an atomic weight of W is about 2 times that of Mo (needless to say, either one of W and Mo may be included or both of them may be included). In order to obtain the above effect, the content of 1 or 2 kinds of compounds of Mo and W, a relationship between Mo and W being represented by the relational expression of (Mo+1/2W), is 0.5% or more. It is preferably 1.5% or more. It is more preferably 1.7% or more. It is still more preferably 2.0% or more, and even more preferably 2.1% or more. However, since an excessive inclusion of 1 or 2 kinds of compounds, a relationship between Mo and W being represented by the relational expression of (Mo+1/2W), causes a decrease in the machinability and the toughness, the content thereof should be 3.5% or less. It is preferably 3.0% or less. It is more preferably 2.7% or less. It is still more preferably 2.6% or less, and even more preferably 2.5% or less.

-V: 0.1 to 1.5%

V forms vanadium carbide and has the effects of strengthening bases, the abrasion resistance, and the tempering softening resistance. When the additive layer manufactured object formed in the additive layer manufacturing step is heated to a quenching temperature to be subjected to "quenching", the vanadium carbide also works as a "pinning particle" for preventing the coarsening of austenite crystal grains during the quenching and heating, and contributes to the improvement of toughness. However, an excessive inclusion of V causes a decrease in the machinability. Thus, the content of V shall be 0.1 to 1.5%. It is preferably 0.3% or more. It is more preferably 0.4% or more. It is still preferably 0.5% or more, and even more preferably 0.6% or more. Further, it is preferably 1.0% or less. It is more preferably 0.9% or less. It is still more preferably less than 0.8%, and even more preferably 0.78% or less.

The following element species may be included, in addition to the above-listed element species.

-Ni: 0 to 1.0%

Ni is an element that inhibits the formation of ferrite in the tool structure. Further, Ni is an effective element for imparting excellent hardenability to the tool material together with C, Cr, Mn, Mo, W, etc., forming a structure mainly composed of martensite even at a low cooling rate at the time of quenching, and preventing the lowering of the toughness. Furthermore, Ni also improves the intrinsic toughness of the base, so it may be included as necessary in the present disclosure. The content of Ni is preferably 0.1% or more. However, an excessive inclusion of Ni increases the deformability of the base and reduces the machinability. Thus, even when Ni is included, the content of Ni shall be 1.0% or less. It is preferably less than 0.5%, more preferably less than 0.3%, and still more preferably less than 0.2%.

-Co: 0 to 1.0%

Co forms an extremely dense and highly adhesive protective oxide film on the surface of the hot work tool while the hot work tool is used.
This oxide film prevents metal contact with a mating material, prevents an increase in the temperature of the tool surface, and provides excellent abrasion resistance. Thus, Co may be included as necessary. When Co is included, the content of Co is preferably 0.1% or more, more preferably 0.2% or more. It is still more preferably 0.3% or more. However, an excessive inclusion of Co decreases the toughness, and thus the content of Co shall be 1.0% or less even when Co is included. The content of Co is preferably less than 0.8%, and more preferably less than 0.7%. It is still more preferably less than 0.6%, and even more preferably less than 0.5%.

-Nb: 0 to 0.3%

Nb forms carbide and has the effect of strengthening bases and improving the abrasion resistance. Further, Nb has the effect of increasing the tempering softening resistance, and like V, the effect of preventing the coarsening of the crystal grains and contributing to the improvement of toughness. Thus, Nb may be included as necessary. When Nb is included, the content thereof is preferably 0.01% or more. It is more preferably 0.05% or more, still more preferably 0.1% or more. Since an excessive inclusion of Nb causes a decrease in the machinability, the content of Nb should be 0.3% or less, when Nb is included. It is preferably less than 0.25%, and more preferably less than 0.2%.

Cu, Al, Ca, Mg, O (oxygen), and N (nitrogen) are elements that may remain in hot work tools as unavoidable impurities. In the present disclosure, contents of these elements are preferably as low as possible. On the other hand, small amounts of these elements may be included in order to obtain additional effects such as control of the shape of inclusions, and improvement of other mechanical properties and manufacturing efficiency. In this case, the ranges of Cu $\leq$ 0.25%, Al $\leq$ 0.04%, Ca $\leq$ 0.01%, Mg $\leq$ 0.01%, O $\leq$ 0.05%, and N $\leq$ 0.05% are sufficiently allowable, and these ranges are preferable upper limits in the definition according to the present disclosure. The content of A1 is more preferably 0.025% or less.

(2) The additive layer manufactured hot work tool according to the present disclosure has an area ratio of defects having an area of 1 $\mu$m$^2$ or more of 0.6% or less in a cross section parallel to the lamination direction.

The hot work tool according to the present disclosure is produced by the additive layer manufacturing method. In this case, in the additive layer manufacturing method, "a small unit" of the metal powder is partially melted and solidified. Thus, "defects (so to speak, casting defects)" such as vacancies, voids, holes, blowholes, pinholes, etc. are easily generated in the formed additive layer manufactured object. These defects are not eliminated by the subsequent heat treatment step (quenching and tempering) and remains in the hot work tool as a final product.

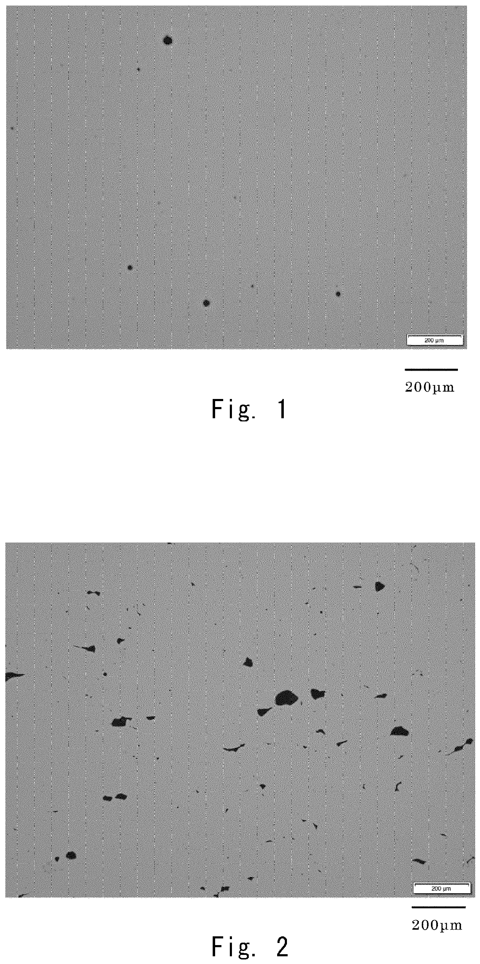

In such an aspect, first, in order to evaluate the defects generated in the additive layer manufactured hot work tool, it is appropriate to observe a "cross section parallel to the lamination direction", which is a cross section including each layer, because defects in the additive layer manufactured hot work tool are generated in each layer during the additive layer manufacturing step. Figs. 1 and 2 are optical micrographs showing an example of defects observed in a cross section parallel to the lamination direction of the additive layer manufactured hot work tool (100 x magnification). The dark areas observed in the background of the micrograph are defects. Specifically, the inventors of the present disclosure found that, in a cross section parallel to the lamination direction of the additive layer manufactured hot work tool, there is a distinct boundary where the toughness changes at a point where the area ratio of defects having an area of 1 $\mu$m$^2$ or more is approximately "0.6%", and that the toughness of the additive layer manufactured hot work tool is remarkably improved by reducing the area ratio to 0.6% or less. The area ratio of defects having an area of 1 $\mu$m$^2$ or more is preferably 0.4% or less, more preferably 0.2% or less, still more preferably 0.08% or less, and particularly preferably 0.05% or less. It is needless to say that 0% is most preferable.

For example, an optical microscope may be used to analyze the above-described "defects having an area of 1 $\mu$m$^2$ or more". First, a cross section parallel to the lamination direction of the additive layer manufactured hot work tool is sampled from the position of the center part of the additive layer manufactured hot work tool. At this time, whether this cross section is in "the state of being parallel to the lamination direction" can be determined from a lamination trace in the additive layer manufactured hot work tool, the tool shape, and so on. The additive layer manufactured tool is usually laminated in the direction of the work surface (work plane) of the tool having a predetermined shape in the layered manufacturing step. Next, an area of 1200 $\mu$m in length $\times$ 1700 $\mu$m in width in this cross section is taken as one visual field, and three visual fields are taken by an optical microscope (100 x magnification) (Figs. 1 and 2). Then, banalization processing is performed on each of the photographed visual fields so as to clarify the boundary between the defects and the background, the area ratio of the defects whose area occupying the visual field is 1 $\mu$m$^2$ or more is measured, and an average of the measured values of the area ratios in the three visual fields of may be defined as the "area ratio of defects having an area of 1 $\mu$m$^2$ or more" according to the present disclosure.

Hot work tools produced by the additive layer manufacturing method typically have many "small" defects inside them, ranging in size from a few microns to tens of microns. In this regard, hot work tools produced by the additive layer manufacturing method are distinguished from hot work tools produced by the ingot making method. Even in the additive layer manufactured hot work tool according to the present disclosure in which the number of defects having an area of 1 $\mu$m$^2$ or more is reduced, there can be more defects "still smaller" than the area of 1 $\mu$m$^2$ or more, and the additive layer manufactured hot work tool can be distinguished from the hot work tool by the ingot making method.

(3) The method of manufacturing an additive layer manufactured hot work tool according to the present disclosure includes an additive layer manufacturing step of forming an additive layer manufactured object by repeating the operation of laying a metal powder having the above-described (1) component composition on a stage, irradiating the metal powder laid on the stage with a heat source while scanning the heat source on the metal powder, and partially melting and solidifying the metal powder upward in the scanning direction of the heat source. The additive layer manufactured hot work tool according to the present disclosure can be manufactured based on the known powder bed method. Specifically, an additive layer manufactured object is formed by the additive layer manufacturing step of repeating the operation of laying a metal powder having a predetermined component composition on a stage, irradiating the metal powder laid on the stage with a heat source while scanning the heat source on the metal powder, and partially melting and solidifying the metal powder upward the scanning direction of the heat source. A laser or an electron beam may be used as the above heat source. It has been found that the number of defects in the additive layer manufactured object can be reduced by using the metal powder having the above-described component composition as the predetermined metal powder and irradiating the metal powder with the heat source while scanning the heat source on the metal powder. Further, the additive layer manufactured heat work tool according to the present disclosure can be obtained by further performing a heat treatment step including quenching and tempering on the additive layer manufactured object formed by the above additive layer manufacturing step.

As an additive layer manufacturing condition when the metal powder having the above-described component composition is irradiated with the heat source while scanning the heat source on the metal powder, for example, the scanning rate of the heat source is preferably 400 mm/second or more. Further, the scanning rate of the heat source is preferably 1800 mm/sec or less. When the scanning rate of the heat source is too high, the metal powder cannot obtain sufficient heat, so that the metal powder cannot be sufficiently melted, and consequently, a large number of the defects (holes) are likely to be formed in the solidified additive layer manufactured object. On the other hand, when the scanning rate of the heat source is too low, the metal powder is excessively heated, and the flow of the molten metal becomes active, which causes the gas to be entrained, thereby making it easy for defects (bubbles) to be mixed into the solidified additive layer manufactured object. The scanning rate of the heat source is more preferably 500 mm/sec or more, and still more preferably 600 mm/sec or more. Further, it is preferably 1500 mm/sec or less, more preferably 1300 mm/sec or less, and still more preferably 1100 mm/sec or less. Furthermore, it is even more preferably 1000 mm/sec or less, and particularly preferably 900 mm/sec or less.

Further, as an additive layer manufacturing condition when the metal powder having the above-mentioned component composition is irradiated with a heat source while scanning the heat source on the metal powder, for example, the energy density of the heat source is preferably 50 $J/mm^3$ or more. Further, the energy density of the heat source is preferably 150 $J/mm^3$ or less. The energy density of the heat source is expressed by the following formula.

$$\text{Energy density of heat source } (\text{J/mm}^3)$$
$$= \text{output of heat source } (\text{W})/[\text{scanning rate of heat source}$$
$$(\text{mm/sec}) \times \text{scanning pitch of heat source } (\text{mm}) \times \text{lamination thickness}$$
$$\text{per scanning } (\text{mm})]$$

When the energy density of the heat source is too high, the metal powder is excessively heated, and the flow of the molten metal becomes active, which causes the gas to be entrained, thereby making it easy for defects (bubbles) to be mixed into the solidified additive layer manufactured object. On the other hand, when the energy density is too low, the metal powder cannot be sufficiently melted, and a large number of defects (holes) generated from gaps in the metal powder are likely to be formed in the solidified molded product. In the present disclosure, it has been confirmed that the structure of the target additive layer manufactured object can be easily obtained by setting the energy density within a preferable range of 50 $J/mm^3$ or more or 150 $J/mm^3$ or less. The range of the energy density is more preferably 52 $J/mm^3$ or more, and still more preferably 53 $J/mm^3$ or more. Further, it is more preferably 120 $J/mm^3$ or less, and still more preferably 100 $J/mm^3$ or less. It is even more preferably 80 $J/mm^3$ or less.

The preferred ranges and the like of the output of the heat source, the scanning pitch of the heat source, and the lamination thickness per scan are as follows.

First, when the output of the heat source is too low, the metal powder cannot be sufficiently melted, and a large number of defects (holes) generated from gaps in the metal powder are likely to be formed in the solidified molded object. Thus, the output of the heat source is preferably 50 W or more. It is more preferably 100 W or more, and still more preferably 150 W or more.

The upper limit of the output of the heat source can be set appropriately. For example, the upper limit of the output of the heat source may be set to 400 W, 350 W, or 300 W. When the output of the heat source is too high, as described above, the energy density of the heat source is increased, and defects are likely to be mixed into the solidified additive layer manufactured object.

Next, if the scanning pitch of the heat source becomes too large, it becomes difficult to melt the laid metal powder on the entire surface when the metal powder is irradiated with the heat source. This could also become a cause of forming defects (holes) in the solidified additive layer manufactured object. Note that the scanning pitch of the heat source is a distance (distance between heat sources) between the beams of the heat source that the metal powder is scanned. When the scanning pitch of the heat source becomes too small, the metal powder is excessively heated, and the flow of the molten metal becomes active, which causes the gas to be entrained, thereby making it easy for defects (bubbles) to be mixed into the solidified additive layer manufactured object.

When the lamination thickness per scan is too small, the number of times of lamination that is required to achieve a predetermined size of an additive layer manufactured object is increased, thereby increasing the time needed for the additive layer manufacturing step. The "lamination thickness per scan" is a "thickness of a metal powder layer per layer" laid out to form one layer. For example, the lamination thickness per scan is preferably 0.01 mm or more. It is more preferably 0.02 mm or more. However, if the lamination thickness per scan is too large, when the metal powder is irradiated with the heat source, it becomes difficult to apply heat to the entire metal powder that has been laid out, thereby making it difficult for the metal powder to be sufficiently melted.

An appropriate value of the scanning pitch of the heat source and an appropriate value of the lamination thickness per scan depend on the scanning rate and output of the heat source. Thus, after the scanning rate and the output of the heat source are determined, for example, the scanning pitch of the heat source and the lamination thickness per scan may be appropriately set in such a way that the area ratio of defects of the additive layer manufactured hot work tool becomes a desired value in consideration of the above-described energy density value of the heat source.

In the production of the additive layer manufactured hot work tool according to the present disclosure, a median diameter D50 of the metal powder used in the additive layer manufacturing step can be set to 200 $\mu$m or less when measured by, for example, the laser diffraction/scattering method. A heat source having a diameter larger than this value of the D50 may be used for the metal powder having this value of the D50. The D50 of the metal powder is preferably 200 $\mu$m or less so that the metal powder can be evenly laid out on the stage. More preferably, the D50 is 150 $\mu$m or less. It is more preferably 100 $\mu$m or less, and still more preferably 50 $\mu$m or less. The lower limit of the D50 is preferably 10 $\mu$m, for example, in terms of the point that the metal powder is difficult to be scattered during irradiation with the heat source. The D50 of the metal powder is more preferably 20 $\mu$m, and still more preferably 30 $\mu$m. Further, it is preferable that the diameter of the heat source be made larger than the diameter D50 of the metal powder so that the assemblies of the metal powder can be uniformly melted. The diameter of the heat source can be specified, for example, by the width of the focus of the heat source.

(4) The method of manufacturing an additive layer manufactured hot work tool according to the present disclosure includes a heat treatment step of tempering the additive layer manufactured object formed by the above (3) additive layer manufacturing step at a tempering temperature of 500 to 700 °C.

The additive layer manufactured object formed in the above-mentioned additive layer manufacturing step may be tempered to be formed into a product of an "additive layer manufactured hot work tool" having predetermined hardness. During this time, the additive layer manufactured object can be formed into the shape of a hot work tool by various kinds of machining such as cutting and drilling. In this case, in order to facilitate machining, annealing can be performed on the additive layer manufactured object in the additive layer manufacturing step. Annealing is also expected to have the effect of making the vanadium carbide fine in the structure of the tempered additive layer manufactured hot work tool. Finishing machining may be performed after the tempering. Further, in some cases, the above-mentioned machining may be collectively performed on the tempered additive layer manufactured object together with the finishing machining to finish the product of the additive layer manufactured hot work tool.

Note that quenching may be performed before the above-described tempering. The additive layer manufactured object in the additive layer manufacturing step may be subjected to normalization regardless whether or not annealing is performed and regardless of before or after annealing.

The tempering temperature varies depending on the target hardness, etc., but is generally about 500 to 700 °C. When quenching is performed before tempering, the quenching temperature is approximately 900 to 1100 °C. For example, in the case of SKD61, which is a typical hot work tool steel, the quenching temperature is about 1000 to 1030 °C and the tempering temperature is about 550 to 650 °C.

The tempering hardness is preferably 50 HRC (Rockwell hardness) or less. It is more preferably 48 HRC or less. It is still more preferably 40 HRC or more, and even more preferably 42 HRC or more. In the present disclosure, the hardness can be measured according to the measurement method described in JIS Z 2245 "Rockwell hardness test-method", and Rockwell C scale hardness is used.

At this time, when the above-described quenching is performed in the present disclosure, the quenching temperature is preferably set to "1010 °C or less". More preferably, the quenching temperature is 1000 °C or less. Since the additive layer manufactured hot work tool according to the present disclosure has the above-described component composition, carbides such as chromium, molybdenum, tungsten, and vanadium are present in the structure. Among these carbides, the vanadium carbide (V carbide) is a carbide that does not dissolve in solids in the subsequent quenching step and instead becomes coarse upon quenching and heating. The coarse vanadium carbide can deteriorate the toughness of the additive layer manufactured hot work tool. Thus, in the additive layer manufactured hot work tool according to the present disclosure, by making the vanadium carbide fine, it is possible to clearly exhibit the effect of improving the "original" toughness according to the present disclosure because of the above-mentioned limitation of large defects. Fine vanadium carbide also functions as pinning particles and contributes to the refinement of tempered prior austenite crystal grains. In order to make the vanadium carbide fine, it is effective to lower the quenching temperature in the quenching step. This results in further improving the toughness of the additive layer manufactured hot work according to the present disclosure.

(5) In the method of manufacturing an additive layer manufactured hot work according to the present disclosure, quenching is not performed before tempering in the heat treatment step (4). If further refinement of the vanadium carbide is desired, quenching itself may be omitted. That is, in the method of manufacturing an additive layer manufactured hot work according to the present disclosure, the heat treatment step performed on the additive layer manufactured object in the (3) additive layer manufacturing step can be rephrased from the "heat treatment step of performing tempering at a tempering temperature of 500 to 700 °C" in (4) to the "heat treatment step of performing a heat treatment at a heating temperature of 500 to 700 °C". This omission of quenching is effective for further refinement of the vanadium carbide, because the vanadium carbide does not go through the process of "quenching and heating" which is one factor of coarsening of the vanadium carbide. Further, by not going through the process of quenching and heating, the fine structure during the additive layer manufacturing is maintained as fine prior austenite crystal grains even in the state of an additive layer manufactured hot work tool. The effect that should have been obtained by the omitted quenching can be complemented in the process in which the solidified additive layer manufactured object is cooled in the (3) additive layer manufacturing step of (so to speak, "direct quenching"). At this time, normalization may be performed after the additive layer manufacturing step. Thus, the present disclosure is more effective in improving the toughness of the additive layer manufactured hot work according to the present disclosure.

Even when the quenching is omitted, the tempering hardness is preferably 50 HRC or less. It is more preferably 48 HRC or less. It is still more preferably 40 HRC or more. It is even more preferably 42 HRC or more.

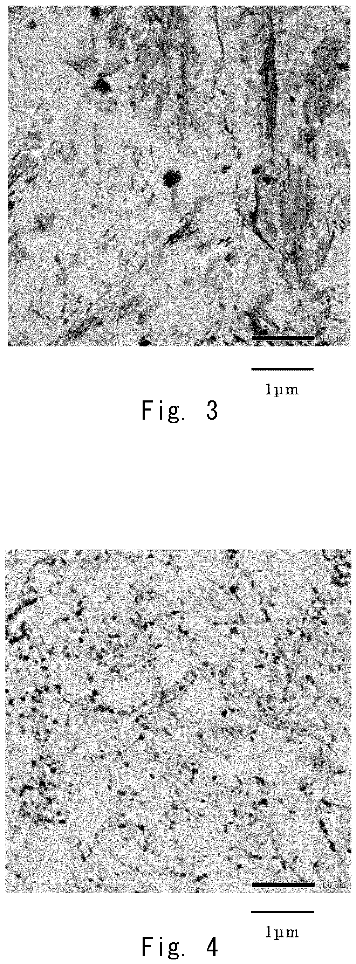

In regard to the above-described refinement of the vanadium carbide, Fig. 3 is a transmission electron micrograph showing an example of the vanadium carbide confirmed in a cross section parallel to the lamination direction of the additive layer manufactured hot work tool which has been subjected to the above-described (4) heat treatment step and the quenching temperature of 1030 °C (i.e., additive layer manufactured hot work tool 1 according to Example 1 described later) (50,000 x magnification). Fig. 4 is a transmission electron micrograph showing an example of vanadium carbide observed in a cross section parallel to the lamination direction of the additive layer manufactured hot work tool which has been subjected to the above-described (5) heat treatment step without the quenching (i.e., additive layer manufactured hot work tool 1B according to Example 3 which will be described later) (50,000 x magnification). In Fig. 3, vanadium carbide having an equivalent circular diameter (area equivalent circular diameter) of about 200 nm is confirmed (dark particles in the center of the drawing are vanadium carbide). In Fig. 4, all the confirmed vanadium carbides have an equivalent circular diameter of less than 200 nm.

[Example 1]

Metal powder of hot work tool steel having D50 of 38.0 $\mu$m with the component composition of Table 1 was prepared by the gas atomization method. Then, using this metal powder, the additive layer manufacturing step by the powder bed method was performed to produce an additive layer manufactured object having length of 12 mm $\times$ width of 60 mm $\times$ height of 12 mm. For the additive layer manufacturing, EOS-M290 manufactured by EOS GmbH using a laser as a heat source was used. Table 2 shows the conditions of the additive layer manufacturing step.

**[Table 1]**

| | | | | | | | | | | | | mass% |
|---|---|---|---|---|---|---|---|---|---|---|---|---|
| C | Si | Mn | P | S | Cr | Mo | W | V | Ni[*1] | Co[*1] | Nb[*1] | Fe[*2] |
| 0.36 | 0.35 | 0.62 | 0.0030 | 0.0014 | 3.96 | 2.30 | 0.03 | 0.72 | - | - | - | Bal. |
| *1: Less than 0.1 % (no addition) <br> *2: Including impurities (Cu≤0.25%, Al≤0.04%, Ca≤0.01%, Mg≤0.01%, 0≤0.05%, N≤0.05%) | | | | | | | | | | | | |

[Table 2]

| Additive layer manufacturing condition | Laser output (W) | Scanning rate (mm/s) | Lamination thickness per scan (mm) | Scanning pitch (mm) | Energy density (J/mm$^3$) |
|---|---|---|---|---|---|
| 1 | 200 | 800 | 0.04 | 0.09 | 69.4 |

(continued)

| Additive layer manufacturing condition | Laser output (W) | Scanning rate (mm/s) | Lamination thickness per scan (mm) | Scanning pitch (mm) | Energy density (J/mm$^3$) |
|---|---|---|---|---|---|
| 2 | 200 | 1500 | 0.04 | 0.05 | 66.6 |
| 3 | 200 | 1000 | 0.04 | 0.09 | 55.6 |
| 4 | 250 | 1250 | 0.04 | 0.09 | 55.6 |
| 5 | 200 | 1750 | 0.04 | 0.05 | 57.1 |
| 6 | 200 | 1250 | 0.04 | 0.09 | 44.4 |
| 7 | 200 | 2000 | 0.04 | 0.05 | 50.0 |

The additive layer manufactured object was subjected to quenching and tempering in a heat treatment step (target hardness 43 HRC). The quenching was carried out by maintaining the quenching temperature at 1030 °C for 1 hour and then oil cooling. The tempering was carried out by repeating the tempering with air-cooling two times or more after keeping the tempering temperature within the range of 620 to 650 °C for 1 hour so that the hardness became 43 HRC.

Then, with respect to the additive layer manufactured hot work tools 1 to 7 corresponding to the laminated molding conditions 1 to 7 obtained by the heat treatment step described above, a cross section of each of the additive layer manufactured hot work tools 1 to 7 parallel to the lamination direction was analyzed in the manner described above, and the area ratio of defects having an area of 1 $\mu$m$^2$ or more in the cross section was examined. Note that the three visual fields used for the examination of the area ratio of defects in the above-described manner were collected at different positions in the "same (one) cross section". Fig. 1 is an optical micrograph of the additive layer manufactured hot work tool 1, and Fig. 2 is an optical micrograph of an additive layer manufactured hot work tool 7. The toughness of the additive layer manufactured hot work tools 1 to 7 in the direction orthogonal to the lamination direction (scanning direction of the laser) was examined. In order to examine the toughness, Charpy test pieces were collected from the additive layer manufactured hot work tools so that the length direction of the notch is aligned with the lamination direction. Then, a 2U notch Charpy test in accordance with JIS Z 2242 was carried out twice for each additive layer manufactured hot work tool, and the average value of the two 2U notch Charpy tests was obtained.

The results are shown in Table 3. Table 3 shows that the area ratio of defects having an area of 1 $\mu$m$^2$ or more was decreased, and the Charpy impact value was improved. Thus, the Charpy impact value was remarkably improved at the area ratio of the defects of 0.6% or less.

**[Table 3]**

| Additive layer manufactured hot work tool | Area ratio of defects (%) | Charpy impact. value (J/cm$^2$) | Remarks |
|---|---|---|---|
| 1 | 0.02 | 63.6 | Examples of present disclosure |
| 2 | 0.09 | 45.0 | |
| 3 | 0.10 | 38.7 | |
| 4 | 0.23 | 35.9 | |
| 5 | 0.54 | 35.2 | |
| 6 | 0.72 | 25.5 | Comparative example |
| 7 | 2.63 | 19.7 | |

[Example 2]

For the additive layer manufactured hot work tools 1 and 3 according to Example 1, the additive layer manufactured hot work tools 1A and 3A in which the quenching temperature at the time of quenching was lowered from 1030 °C to 1000 °C were produced. At this time, the tempering with air cooling was repeated 2 times or more after maintaining at the tempering temperature of 620 to 650 °C for 1 hour so that the hardness became 43 HRC. The area ratios of the defects of the tempered additive layer manufactured hot work tools 1A and 3A were equivalent to those of the additive layer manufactured hot work tools 1 and 3. The Charpy impact values of the additive layer manufactured hot work tools 1A and 3A were measured in the same manner as in Example 1 and compared with those of the additive layer manufactured hot work tools 1 and 3. The results are shown in Table 4.

[Table 4]

| Additive layer manufactured hot work tool | Charpy impact value (J/cm$^2$) | Remarks |
|---|---|---|
| 1A | 79.3 | Examples of present disclosure |
| 3A | 61.4 | |

According to Table 4, by lowering the quenching temperature to 1010 °C or lower for both of the additive layer manufactured hot work tools 1A and 3A, the Charpy impact values of the additive layer manufactured hot work tools 1A and 3A exceeded the Charpy impact values of the additive layer manufactured hot work tools 1 and 3 with the quenching temperature of 1030 °C.

[Example 3]

For the additive layer manufactured hot work tool 1 according to Example 1, the additive layer manufactured hot work tool 1B subjected only to tempering without quenching was produced. At this time, the additive layer manufactured hot work tool was held within the temperature range of 620 to 650 °C for 1 hour so that the hardness became 43 HRC, and then repeatedly tempered with air cooling 2 times or more. The area ratio of the defects of the tempered additive layer manufactured hot work tool 1B was equivalent to that of the additive layer manufactured hot work tool 1. The prior austenite grains in the structure had a large irregular shape and were finer than those of the additive layer manufactured hot work tool 1. The Charpy impact value of the additive layer manufactured hot work tool 1B was measured in the same manner as in Example 1 and compared with those of the additive layer manufactured hot work tools 1 and 1A. The results are shown in Table 5.

[Table 5]

| Additive layer manufactured hot work tool | Charpy impact value (J/cm$^2$) | Remarks |
|---|---|---|
| 1B | 83.4 | Example of present disclosure |

According to Table 5, by omitting quenching and performing only tempering on the additive layer manufactured hot work tool 1B, the Charpy impact value of the additive layer manufactured hot work tool 1B exceeded the Charpy impact values of the additive layer manufactured hot work tools 1 and 1A that were subjected to quenching.

This application claims priority to Japanese Patent Application No. 2018-092876, filed on May 14, 2018, the entire disclosure of which is incorporated herein.

## Claims

1. An additive layer manufactured hot work tool comprises a component composition of, by mass%, C: 0.3 to 0.5%, Si: 2.0% or less, Mn: 1.5% or less, P: 0.05% or less, S: 0.05% or less, Cr: 3.0 to 6.0%, 1 or 2 kinds of compounds of Mo and W, a relation between Mo and W being represented by a relational expression (Mo+1/2W): 0.5 to 3.5%, V: 0.1 to 1.5%, Ni: 0 to 1.0%, Co: 0 to 1.0%, Nb: 0 to 0.3%, and Fe and an unavoidable impurity as a remainder, wherein an area ratio of defects having an area of 1 $\mu$m$^2$ or more is 0.6% or less in a cross section parallel to the lamination direction.

2. The additive layer manufactured hot work tool according to Claim 1, wherein hardness is 40 to 50 HRC.

3. A method of manufacturing an additive layer manufactured hot work tool comprising:

an additive layer manufacturing step of forming an additive layer manufactured object by repeating an operation of laying out, on a stage, a metal powder comprising a component composition of, by mass%, C: 0.3 to 0.5%, Si: 2.0% or less, Mn: 1.5% or less, P: 0.05% or less, S: 0.05% or less, Cr: 3.0 to 6.0%, 1 or 2 kinds of compounds of Mo and W, a relation between Mo and W being represented by a relational expression (Mo+1/2W): 0.5 to 3.5%, V: 0.1 to 1.5%, Ni: 0 to 1.0%, Co: 0 to 1.0%, Nb: 0 to 0.3%, and Fe and an unavoidable impurity as a remainder, irradiating the metal powder laid out on the stage with a heat source while scanning the heat source on the metal powder, and partially melting and solidifying the metal powder upward in a scanning direction of the heat source; and

a heat treatment step of tempering the additive layer manufactured object formed in the additive layer manufacturing step at a tempering temperature of 500 to 700 °C.

4. The method according to Claim 3, wherein
in the heat treatment step, quenching is performed at a quenching temperature of 900 to 1100 °C before the tempering is performed.

5. The method according to Claim 4, wherein
in the heat treatment step, the quenching temperature is set to 1010 °C or less.

6. The method according to Claim 3, wherein
in the heat treatment step, the quenching is not performed before the tempering is performed.

7. The method according to any one of Claims 3 to 6, wherein
in the heat treatment step, hardness is adjusted to 40 to 50 HRC.

8. A metal powder for an additive layer manufactured hot work tool comprising a component composition of, by mass%, C: 0.3 to 0.5%, Si: 2.0% or less, Mn: 1.5% or less, P: 0.05% or less, S: 0.05% or less, Cr: 3.0 to 6.0%, 1 or 2 kinds of compounds of Mo and W, a relation between Mo and W being represented by a relational expression (Mo+1/2W): 0.5 to 3.5%, V: 0.1 to 1.5%, Ni: 0 to 1.0%, Co: 0 to 1.0%, Nb: 0 to 0.3%, and Fe and an unavoidable impurity as a remainder.

200μm

Fig. 1

200μm

Fig. 2

1μm

Fig. 3

1μm

Fig. 4

## INTERNATIONAL SEARCH REPORT

| | International application No. |
|---|---|
| | PCT/JP2019/017665 |

**A. CLASSIFICATION OF SUBJECT MATTER**
Int.Cl. C22C38/00(2006.01)i, B22F3/105(2006.01)i, B22F3/16(2006.01)i,
         B33Y10/00(2015.01)i, B33Y70/00(2015.01)i, B33Y80/00(2015.01)i,
         C22C38/60(2006.01)i

According to International Patent Classification (IPC) or to both national classification and IPC

**B.   FIELDS SEARCHED**

Minimum documentation searched (classification system followed by classification symbols)
Int.Cl. C22C38/00, B22F3/105, B22F3/16, B33Y10/00, B33Y70/00, B33Y80/00,
        C22C38/60

Documentation searched other than minimum documentation to the extent that such documents are included in the fields searched
Published examined utility model applications of Japan          1922–1996
Published unexamined utility model applications of Japan        1971–2019
Registered utility model specifications of Japan                1996–2019
Published registered utility model applications of Japan        1994–2019

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X<br>Y | JP 2015-221933 A (DAIDO STEEL CO., LTD.) 10 December 2015, paragraphs [0010], [0059]-[0063] (Family: none) | 3, 6-8<br>1-7 |
| X<br>Y | WO 2017/111680 A1 (UDDEHOLMS AB) 29 June 2017, page 6, line 30 to page 7, line 2, page 9, line 10 to page 10, line 10 & US 2019/0003021 A1 & EP 3394309 A1 & CN 108474085 A & KR 10-2019-0034491 A | 8<br>1-7 |

☒   Further documents are listed in the continuation of Box C.          ☐   See patent family annex.

| | |
|---|---|
| *       Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 08 July 2019 (08.07.2019) | 16 July 2019 (16.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2019/017665 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-143354 A (SHINTOMI GOLF KK) 21 May 2002, paragraphs [0006], [0010]-[0011] (Family: none) | 1-2 |
| Y | JP 2017-519639 A (KS KOLBENSCHMIDT GMBH) 20 July 2017, paragraphs [0037]-[0038], [0042], [0044] & US 2017/0182555 A1, paragraphs [0042]-[0043], [0047], [0048] & WO 2015/181229 A1 & EP 3154731 A1 & CN 106488817 A | 1-2 |
| Y | JP 2016-502596 A (GENERAL ELECTRIC CO.) 28 January 2016, paragraphs [0004]-[0006], [0011], [0018]-[0022], [0027], [0029]-[0038], [0047]-[0048], [0054], [0074]-[0082] & US 2015/0273631 A1, paragraphs [0005]-[0007], [0011], [0019]-[0023], [0028], [0030]-[0037], [0047]-[0048], [0054], [0076]-[0084] & WO 2014/071135 A1 & EP 2914394 A1 & CN 104755197 A | 1-2 |
| Y | JP 2009-532585 A (UDDEHOLM TOOLING AKTIEBOLAG) 10 September 2009, paragraphs [0022]-[0024] & US 2009/0191086 A1, paragraphs [0027]-[0028] & WO 2007/114781 A1 & EP 2002025 A1 & KR 10-2009-0010187 A & CN 101415854 A | 3-7 |
| P, X | US 2019/0040481 A1 (KENNAMETAL INC.) 07 February 2019, paragraphs [0012]-[0018] & WO 2019/028227 A1 | 1-8 |

Form PCT/ISA/210 (continuation of second sheet) (January 2015)

**EP 3 795 707 A1**

**REFERENCES CITED IN THE DESCRIPTION**

**Patent documents cited in the description**

- JP 2016145407 A

- JP 2018092876 A